# EUROPEAN PATENT APPLICATION

(11) **EP 4 471 939 A1**
(43) Date of publication of application: **04.12.2024**
(21) Application number: 24174464.8
(22) Date of filing: 07.05.2024
(51) Int. Cl.: H01M 10/6555, H01M 50/291

(54) **BATTERY PACK AND ELECTRIC EQUIPMENT**

(30) Priority: 29.05.2023 CN 202310624028
(71) Applicant: Eve Energy Co., Ltd., Huizhou, Guangdong 516006 (CN)
(72) Inventor: QIU, Wencong, Huizhou,Guangdong, 51600 (CN); CHEN, Zhiwei, Huizhou,Guangdong, 516006 (CN); CHEN, Zhaohai, Huizhou,Guangdong, 516006 (CN)
(74) Representative: Herrero & Asociados, S.L.

(57) **Abstract**

The present disclosure provides a battery pack (1) and an electric equipment. The battery pack (1) includes a battery module (20), a reinforcement module (12), and a liquid cooling module (30). The battery module (20) includes a plurality of cell groups (200) arranged at intervals along a first direction. Each cell group (200) includes a plurality of battery cells (21) arranged at intervals along a second direction. The reinforcement module (12) includes a plurality of reinforcement beams (121). The liquid cooling module (30) includes a plurality of liquid cooling plates (31). The plurality of liquid cooling plates (31) and the plurality of reinforcement beams (121) are alternately arranged along the first direction. One cell group (200) is provided between every adjacent two of the liquid cooling plates (31) and the reinforcement beams (121).

## Description

### TECHNICAL FIELD

The present disclosure relates to the technical field of batteries, and in particular, to a battery pack and an electric equipment.

### BACKGROUND

As one of core components of an electric vehicle, a power battery is the energy hub of the electric vehicle. A battery pack, as an energy distribution unit of the power battery, plays an irreplaceable role in the entire vehicle. At present, when the battery pack is subjected to thermal abuse, electrical abuse (overcharge, over-discharge, internal short circuit, etc.), or mechanical abuse (extrusion, needle puncture, collision, etc.), battery cells are prone to suffer from thermal runaway and explosion and fire. When one single battery cell catches fire, it will cause other battery cells to undergo a chain of thermal runaway, eventually leading to the battery being scrapped.

Therefore, there is an urgent need to improve a mechanical strength of the battery pack and isolate adjacent battery cells to avoid chain phenomena of thermal runaway.

### SUMMARY

Embodiments of the present disclosure provide a battery pack and an electric equipment to solve or at least partially solve the shortcomings of the above background.

In a first aspect, embodiments of the present disclosure provide a battery pack. The battery pack includes a battery module, a reinforcement module, and a liquid cooling module. The battery module includes a plurality of cell groups cell groups arranged at intervals along a first direction. Each cell group includes a plurality of battery cells arranged at intervals along a second direction. The reinforcement module includes a plurality of reinforcement beams. The liquid cooling module includes a plurality of liquid cooling plates. The plurality of liquid cooling plates and the plurality of reinforcement beams are alternately arranged along the first direction. One cell group is provided between every adjacent two of the liquid cooling plates and the reinforcement beams.

In a second aspect, embodiments of the present disclosure provide an electrical device, which includes any one of the battery packs described above.

Beneficial effects of the embodiments of the present disclosure: Embodiments of the present disclosure provide a battery pack and an electric equipment. The battery pack includes a battery module, a reinforcement module, and a liquid cooling module. The battery module includes a plurality of cell groups arranged at intervals along a first direction. Each cell group includes a plurality of battery cells arranged at intervals along a second direction. The reinforcement module includes a plurality of reinforcement beams. The liquid cooling module includes a plurality of liquid cooling plates. The plurality of liquid cooling plates and the plurality of reinforcement beams are alternately arranged along the first direction. One cell group is provided between every adjacent two of the liquid cooling plates and the reinforcement beams. In the embodiments of the present disclosure, the plurality of liquid cooling plates and the plurality of reinforcement beams are alternately arranged along the first direction, which reinforces the strength of the battery pack and avoids the problems in the related art that the battery cells are prone to suffer from thermal runaway when the battery pack is subjected to thermal abuse, electrical abuse, or mechanical abuse. Furthermore, one cell group is provided between every adjacent two of the liquid cooling plates and the reinforcement beams, so that each single cell group is independently isolated.

### BRIEF DESCRIPTION OF THE DRAWINGS

In order to explain the technical solutions in the embodiments more clearly, the drawings needed to be used in the description of the embodiments will be briefly introduced below. Obviously, the drawings in the following description are only some embodiments of the present disclosure. Those skilled in the art may also obtain other drawings based on these drawings without exerting creative efforts.
FIG. 1 is a schematic structural view of a battery pack provided by an embodiment of the present disclosure.
FIG. 2 is an exploded view of the battery pack provided by the embodiment of the present disclosure.
FIG. 3 is a schematic structural view of a box provided by an embodiment of the present disclosure.
FIG. 4 is a schematic structural view of a reinforcement module provided by an embodiment of the present disclosure.
FIG. 5 is a schematic structural view of a liquid cooling module provided by an embodiment of the present disclosure.
FIG. 6 is a schematic structural view of a support frame provided by an embodiment of the present disclosure.
FIG. 7 is an enlarged schematic view of part A in FIG. 6.
FIG. 8 is a schematic structural view of a CCS assembly provided by an embodiment of the present disclosure.
FIG. 9 is an enlarged schematic view of part B in FIG. 8.

### List of reference numerals in the drawings:

1, battery pack; 10, box body; 20, battery module; 30, liquid cooling module; 40, colloidal unit; 50, box cover; 60, CCS assembly; 10A, accommodating cavity; 10B, first recess; 10C, second recess; 10B1, first sub-recess; 10C1, second sub-recess; 10B2, third sub-recess; 10C2, fourth sub-recess; 12, reinforcement module; 13, cross beam; 14, support frame; 111, bottom plate; 112, side beam; 112A, first side beam; 112B, second side beam; 12B, protrusion; 121, reinforcement beam; 121A, second plug-in part; 121A1, third plug-in sub-part; 121A2, fourth plug-in sub-part; 14A, installation slot; 14A1, through hole; 14B, fixing hole; 200, cell group; 21, battery cell; 31, liquid cooling plate; 31A, first plug-in part; 31A1, first plug-in sub-part; 31A2, second plug-in sub-part; 41, foam rubber; 61, fixing frame; 62, busbar; 61A, installation hole; 61A1, positive installation hole; 61A2, negative pole installation hole; 621, busbar unit; 622, connecting arm; 621A, positive connecting part; 621B, negative connecting part.

### DETAILED DESCRIPTION

The technical solutions in the embodiments will be clearly and completely described below with reference to the accompanying drawings in the embodiments. Obviously, the described embodiments are only some of the embodiments of the present disclosure, rather than all of the embodiments. Based on the embodiments in the present disclosure, all other embodiments obtained by those skilled in the art without making creative efforts fall within the protection scope of the present disclosure. In addition, it should be understood that the specific embodiments described here are only used to illustrate and explain the invention, and are not intended to limit the invention. In the present disclosure, unless otherwise specified, the orientational terms such as "upper" and "lower" usually refer to the upper and lower positions of the device in actual use or working conditions, specifically the orientations in the drawings. The terms "Inside" and "outside" refer to the outline of the device.

The embodiments provide a battery pack and an electric equipment. Each is explained in detail below. It should be noted that the order of description of the following embodiments does not limit the preferred order of the embodiments.

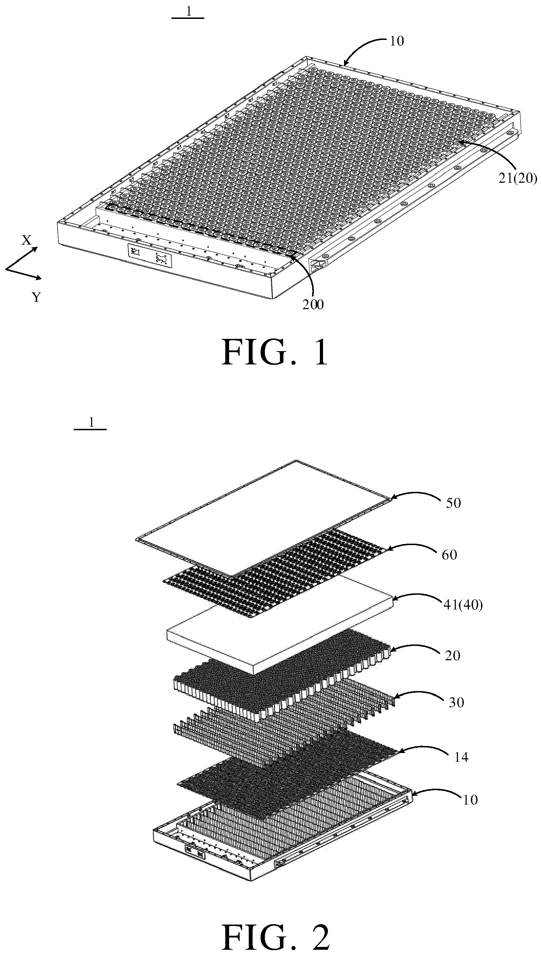

Referring to FIG. 1 to FIG. 9, the embodiments provides a battery pack and an electric equipment. The battery pack 1 includes a battery module 20, a reinforcement module 12, and a liquid cooling module 30. The battery module 20 includes a plurality of cell groups 200 arranged at intervals along a first direction X, and each cell group 200 includes a plurality of battery cells 21 arranged at intervals along a second direction Y. The reinforcement module 12 includes a plurality of reinforcement beams 121, the liquid cooling module 30 includes a plurality of liquid cooling plates 31, and the plurality of liquid cooling plates 31 and the plurality of reinforcement beams 121 are arranged alternately along the first direction X. One cell group 200 is provided between every adjacent two of the liquid cooling plates 31 and the reinforcement beams 121.

It should be noted that in related arts, when the battery pack is subjected to thermal abuse, electrical abuse (overcharge, over-discharge, internal short circuit, etc.), or mechanical abuse (extrusion, needle puncture, collision, etc.), the battery cells are prone to suffer from thermal runaway and explosion and fire. When one single battery cell catches fire, it will cause other battery cells to undergo a chain of thermal runaway, eventually leading to the battery being scrapped.

It can be understood that in the embodiments the plurality of liquid cooling plates and the plurality of reinforcement beams are alternately arranged along the first direction, which reinforces the strength of the battery pack and avoids the problems in the related art that the battery cells are prone to suffer from thermal runaway when the battery pack is subjected to thermal abuse, electrical abuse, or mechanical abuse. Furthermore, one cell group is provided between every adjacent two of the liquid cooling plates and the reinforcement beams, so that each single cell group may be independently isolated.

The technical solutions of the present disclosure will now be described with reference to specific embodiments.

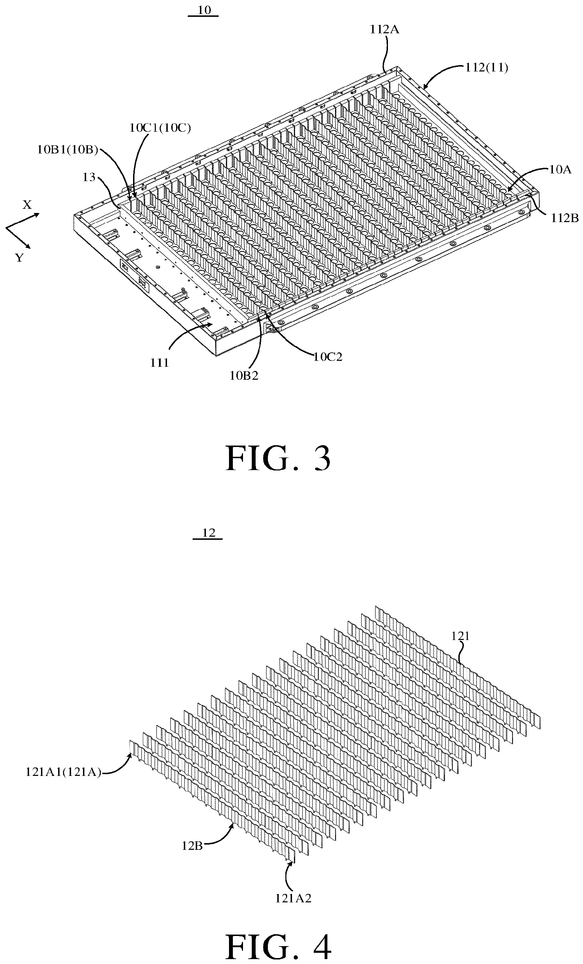

In an embodiment, referring to FIG. 1, FIG. 2 and FIG. 3, FIG. 1 is a a schematic structural view of a battery pack provided by the embodiment of the present disclosure, FIG. 2 is an exploded view of the battery pack provided by the embodiment of the present disclosure, and FIG. 3 is a schematic structural view of a box provided by the embodiment of the present disclosure.

In the embodiment, the battery pack 1 includes a box cover 50 and a box body 10. The box body 10 includes a bottom plate 111 and a plurality of side beams 112. The plurality of side beams 112 are fixedly arranged on edges of the bottom plate 111 to enclose and define an accommodation cavity 10A. The battery module 20, the reinforcement module 12, and the liquid cooling module 30 are all arranged in the accommodation cavity 10A. The box cover 50 is arranged opposite to the bottom plate 111, and the box cover 50 is configured to seal the accommodation cavity 10A.

In the embodiment, the box body 10 includes a cross beam 13, the bottom plate 111, and the plurality of side beams 112. The plurality of side beams 112 are connected in sequence to form an annular structure, and both ends of the cross beams 13 are in contact with the side beams 112, so that the bottom plate 111, the cross beam 13, and the plurality of side beams 112 define the accommodation cavity 10A for placing the battery module 20.

Furthermore, the reinforcement module 12 includes a plurality of reinforcement beams 121 arranged at intervals along the first direction X. Both ends of the reinforcement beam 121 are fixedly connected to the side beams 112. The liquid cooling module 30 includes a plurality of liquid cooling plates 31 arranged at intervals along the first direction X. The plurality of liquid cooling plates 31 and the plurality of reinforcement beams 121 are alternately arranged along the first direction. One cell group 200 is provided between every adjacent two of the liquid cooling plates 31 and the reinforcement beams 121.

The battery module 20 includes a plurality of cell group 200 arranged at intervals along the first direction, and each cell group 200 includes a plurality of battery cells 21 arranged at intervals along the second direction Y. One cell group 200 is disposed between every adjacent two of the liquid cooling plates 31 and the reinforcement beams 121. Specifically, in the embodiment, the reinforcement beam 121 and/or the liquid cooling plate 31 abut/abuts against outer peripheral surfaces of the battery cells 21 located on both sides, and the reinforcement beam 121 and/or the liquid cooling plate 31 match/matches the outer peripheral surface of the battery cell 21. Preferably, in the embodiment, each of the reinforcement beam 121 and the liquid cooling plate 31 abuts against the outer peripheral surfaces of the battery cells 21 located on both sides, and the reinforcement beam 121 and the liquid cooling plate 31 all match the outer peripheral surface of the battery cell 21.

Specifically, in the embodiment, the battery cell 21 is a cylindrical battery cell, and one cell group 200 includes a plurality of cylindrical battery cells. The reinforcement beam 121 abuts against the outer periphery surfaces of the cylindrical battery cells 21 located on its both sides. The reinforcement beam 121 has a serpentine corrugated structure that matches a cylindrical surface of the cylindrical battery cell 21. The liquid cooling plate 31 abuts against the outer peripheral surfaces of the cylindrical battery cells 21 on both sides. The liquid cooling plate 31 has a serpentine corrugated structure that matches the cylindrical surface of the cylindrical battery cell 21.

It should be noted that in the embodiment, a thickness of the reinforcement beam 121 is greater than or equal to 1 mm and less than or equal to 4 mm. Inner diameter lengths of adjacent liquid cooling plates 31 are equal. The first direction is marked X, and the second direction is marked Y. A preset included angle is formed between the first direction X and the second direction Y. Preferably, the thickness of the reinforcement beam 121 is one of 1 mm, 2 mm, and 3 mm, and the preset included angle is a right angle.

It can be understood that in the embodiments, the reinforcement beams 121 are arranged to have the serpentine corrugated structure that matches the cylindrical surface of the battery cell 21, so that a structure of the reinforcement beam 121 is provided between a gap between the adjacent cell groups 200 to increase a space utilization of the battery pack 1. The reinforcement beams 121 are evenly distributed, which may effectively disperse the force and reduce stress concentration, thereby reinforcing the strength of the battery pack 1. At the same time, the liquid cooling plate 31 is arranged to abut against the outer peripheral surfaces of the battery cells 21 located on its both sides, and the liquid cooling plate 31 has the serpentine corrugated structure that matches the cylindrical surface of the battery cell 21, so that the liquid cooling plate 31 may be attached to the outer peripheral surfaces of the cylindrical battery cells 21 to improve the cooling effect. Furthermore, the plurality of liquid cooling plates 31 and the plurality of reinforcement beams 121 are alternately arranged along the first direction, and every adjacent two of the liquid cooling plates 31 and the reinforcement beams 121 is inserted with one cell group 200, so that each single cell group 200 is independently isolated to prevent the problems that when one single cell group 200 catches fire, other cell groups 200 are caused to undergo a chain of thermal runaway, eventually leading to the battery being scrapped.

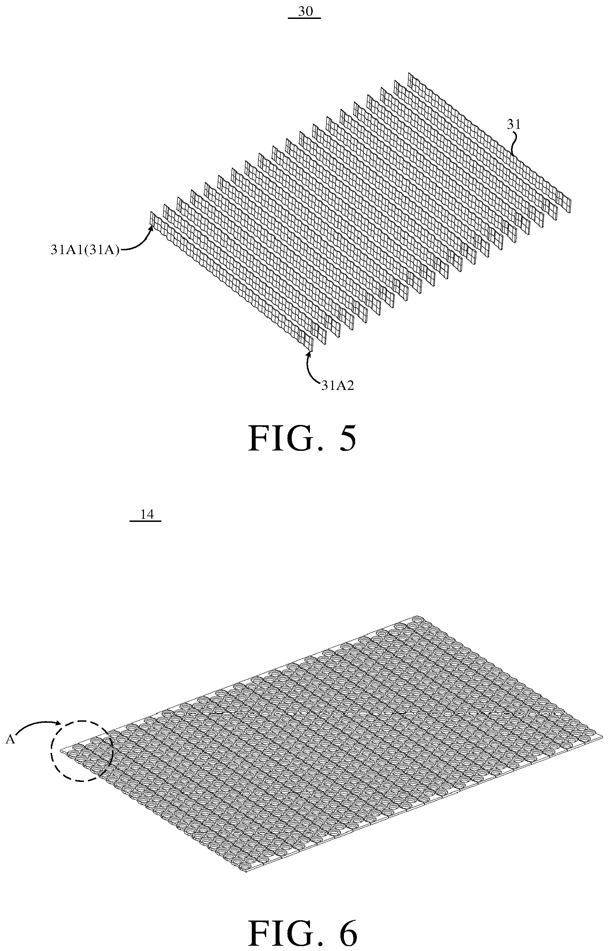

Furthermore, please refer to FIG. 1, FIG. 3, FIG. 4, and FIG. 5, FIG. 4 is a schematic structural view of the reinforcement module provided by the embodiment of the present disclosure, and FIG. 5 is a schematic structural view of the liquid cooling module provided by the embodiment of the present disclosure.

In the embodiment, a plurality of first recesses 10B and a plurality of second recesses 10C are provided on sides of the side beams 112 close to the reinforcement beams 121. The plurality of first recesses 10B and the plurality of second recesses 10C are alternately arranged at intervals along the first direction X. First plug-in parts 31A are provided on sides of the liquid cooling plates 31 close to the side beams 112. Each first plug-in part 31A is plugged in a corresponding one of the first recesses 10B. Second plug-in parts 121A are provided on sides of the reinforcement beams 121 close to the side beams 112. Each second plug-in part 121A is plugged in a corresponding one of the second recesses 10C. Specifically, the second plug-in part 121A and the second recess 10C are fixed by welding.

In the embodiment, the side beams 112 include a first side beam 112A and a second side beam 112B arranged oppositely. One end of the cross beam 13 is in contact with the first side beam 112A, and the other end of the cross beam 13 is in contact with the second side beam 112B. The reinforcement beams 121 are located between the first side beam 112A and the second side beam 112B, and an extending direction of the reinforcement beam 121 is parallel to an extending direction of the cross beam 13. The liquid cooling plates 31 are located between the first side beam 112A and the second side beam 112B, and an extending direction of the liquid cooling plate 31 is parallel to the extending direction of the cross beam 13.

Each first recess 10B includes a first sub-recess 10B1 and a third sub-recess 10B2, and each second recess 10C includes a second sub-recess 10C1 and a fourth sub-recess 10C2. Specifically, one side of the first side beam 112A close to the reinforcement module 12 is provided with a plurality of first sub-recesses 10B1 and a plurality of second sub-recesses 10C1, and the plurality of first sub-recesses 10B1 and the plurality of second sub-recesses 10C1 are alternately arranged at intervals along the first direction X. One side of the second side beam 112B close to the reinforcement module 12 is provided with a plurality of third sub-recesses 10B2 and a plurality of fourth sub-recesses 10C2, and the plurality of third sub-recesses 10B2 and the plurality of fourth sub-recesses 10C2 are alternately arranged at intervals along the first direction X. One first sub-recess 10B1 is arranged corresponding to one third sub-recess 10B2, and one liquid cooling plate 31 is located between one first sub-recess 10B1 and the corresponding one third sub-recess 10B2. One second sub-recess 10C1 is arranged corresponding to one fourth sub-recess 10C2, and one reinforcement beam 121 is located between one second sub-recess 10C1 and the corresponding one fourth sub-recess 10C2.

Each first plug-in part 31A includes a first plug-in sub-part 31A1 and a second plug-in sub-part 31A2, and each second plug-in part 121A includes a third plug-in sub-part 121A1 and a fourth plug-in sub-part 121A2. Specifically, the liquid cooling plate 31 includes one first plug-in sub-part 31A1 and one second plug-in sub-part 31A2. The liquid cooling plate 31 is plugged in the first sub-recess 10B1 through the first plug-in sub-part 31A1 and plugged in the third sub-recess 10B2 through the second plug-in sub-part 31A2. The reinforcement beam 121 includes one third plug-in sub-part 121A1 and one fourth plug-in sub-part 121A1. The reinforcement beam 121 is plugged in the second sub-recess 10C1 through the third plug-in sub-part 121A1 and plugged in the fourth sub-recess 10C2 through the fourth plug-in sub-part 121A2. The third plug-in sub-part 121A1 and the second sub-recess 10C1 are fixed by welding. The fourth plug-in sub-part 121A2 and the fourth sub-recess 10C2 are fixed by welding.

It can be understood that in the embodiment, the liquid cooling plate 31 is plugged in the first sub-recess 10B1 through the first plug-in sub-part 31A1 and plugged in the third sub-recess 10B2 through the second plug-in sub-part 31A2, and the reinforcement beam 121 is plugged in the second sub-recess 10C1 through the third plug-in sub-part 121A1 and plugged in the fourth sub-recess 10C2 through the fourth plug-in sub-part 121A2, thereby improving an assembly efficiency when assembling the liquid cooling plate 31 and the reinforcement beam 121 and improving a production capacity of the battery pack 1. At the same time, the first sub-recess 10B1 and the third sub-recess 10B2 are provided for limiting a position of the liquid cooling plate 31, the third plug-in sub-part 121A1 and the second sub-recess 10C1 are fixed by welding, and the fourth plug-in sub-part 121A2 and the fourth sub-recess 10C2 are fixed by welding, and the second sub-recess 10C1 and the fourth sub-recess 10C2 are provided for limiting a position of the reinforcement beam 121, which may prevent the liquid cooling plate 31 and the reinforcement beam 121 from moving when the battery pack 1 suffers an external impact, thereby improving the stability of the battery pack 1.

It should be noted that the embodiment does not specifically limit positions of the recesses and the plug-in parts. The embodiment illustrates the technical solution of the present disclosure by only taking an example that sides of the side beams 112 close to the reinforcement beams 121 are provided with the plurality of first recesses 10B and the plurality of second recesses 10C alternately arranged at intervals along the first direction X, sides of the liquid cooling plates 31 close to the side beams 112 are provided with first plug-in parts 31A, and sides of the reinforcement beams 121 close to the side beams 112 are provided with second plug-in parts 121A.

For example, in another embodiment, sides of the side beams 112 close to the reinforcement beams 121 are provide with a plurality of first plug-in parts 31A and a plurality of second plug-in parts 121A alternately arranged along the first direction X, sides of the liquid cooling plate 31 close to the side beams 112 are provided with first recesses 10B, and sides of the reinforcement beams 121 close to the side beams 112 are provided with second recesses 10C.

Furthermore, in the embodiment, the battery pack 1 further includes a colloidal unit 40, and the colloidal unit 40 is sleeved on the outer surface of each battery cell 21. Specifically, the colloid unit 40 is provided in the accommodation cavity 10A. The colloid unit 40 includes but is not limited to a foam rubber 41. The foam rubber 41 is provided with a plurality of openings (not shown in the figures). One opening is provided corresponding to one battery cell 21, and the outer surface of the battery cell 21 and an inner wall of the opening are bonded to each other.

Specifically, the battery cell 21 passes through the opening and is fixed on the bottom plate 111, and the foam rubber fills the gap between adjacent battery cells 21, thereby avoiding contact collision between the adjacent battery cells 21 during operation and playing the role of buffering. In addition, the foam rubber also has heat insulation properties, which may effectively reduce the risk of transmission of thermal runaway to adjacent battery cells 21 when single or multiple battery cells 21 in the battery module 20 suffer from the thermal runaway or overheating, thereby preventing the spread of thermal runaway and improving the safety of the battery module 20, i.e. avoiding the problems in the related art that multiple or even all battery cells are caused to undergo a chain of thermal runaway when one single battery cell suffers from thermal runaway, which makes the battery cells unable to be replaced and can only be scrapped, increasing the costs of the battery module.

It can be understood that in the embodiment, the reinforcement beams 121, the liquid cooling plates 31 and the colloid unit 40 are configured to make each single battery cell 21 being independently isolated and fireproofed, which may prevent the heat from being transferred to adjacent single battery cell 21 when one single battery cell 21 suffers from thermal runaway, thereby avoiding the problems in the related art that multiple or even all battery cells 21 are caused to undergo a chain of thermal runaway when one single battery cell 21 suffers from thermal runaway, which makes the battery cells 21 unable to be replaced and can only be scrapped, increasing the costs of the battery module 20, so that the safety of the battery pack 1 is improved.

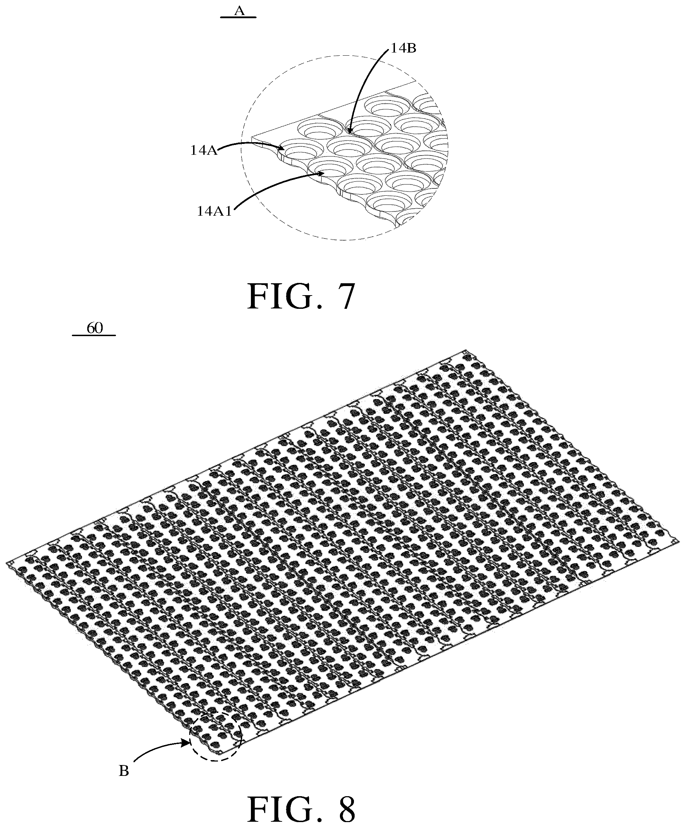

Furthermore, referring to FIG. 1, FIG. 2, FIG. 6, and FIG. 7, FIG. 6 is a schematic structural view of a support frame 14 provided by an embodiment of the present disclosure, and FIG. 7 is an enlarged schematic view of part A in FIG. 6.

In the embodiment, the box body 10 further includes the support frame 14 disposed between the bottom plate 111 and the battery module 20. The support frame 14 is fixedly connected to the reinforcement module 12 and the bottom plate 111. The support frame 14 is provided with a plurality of installation slots 14A. A depth of the installation slot 14A is less than a thickness of the support frame 14. One installation slot 14A is arranged corresponding to one battery cell 21, and the battery cell 21 is placed in the installation slot 14A.

Specifically, in the embodiment, the installation slot 14A is a groove formed by recessing the support frame 14 toward one side facing away from the battery module 20, and a shape of the installation slot 14A matches that of the battery cell 21. Furthermore, the installation slot 14A is cylindrical, and an inner wall of the installation slot 14A is in contact with the outer peripheral surface of the battery cell 21. In the embodiment, the battery cells 21 are placed in the installation slots 14A, and one installation slot is provided corresponding to one battery cell 21, so that multiple battery cells 21 may be installed at the same time during assembly, which greatly improves the assembly efficiency of the battery pack 1, ensures assembly accuracy, and is easy to realize automation. A structural glue may be used to fixedly connect the support frame 14 and the battery cells 21, which makes the connection convenient and reliable and effectively prevents the battery cells 21 from loosening and falling off.

In the embodiment, a pressure relief cavity is defined and enclosed between the support frame 14, the bottom plate 111, and the side beams 112. The support frame 14 also has a plurality of through holes 14A1. One through hole 14A1 is provided corresponding to one installation slot 14A. A diameter of the through hole 14A1 is less than a diameter of the installation slot 14A. The through hole 14A1 passes through the installation slot 14A, and the through hole 14A1 is communicated with the pressure relief cavity.

Specifically, in the embodiment, the through holes 14A1 are pressure relief holes, the diameter of the through hole 14A1 is less than the diameter of the installation slot 14A, and the pressure relief cavity communicates with the installation slots 14A through the through holes 14A1. A design of the pressure relief cavity reduces an impact when the battery cell 21 bursts and improves the operation safety of the battery module 20. At the same time, the through holes 14A1 may quickly export the heat of the battery cells 21 or the gas generated when the battery cell is thermal out of control from the bottom of the battery cell 21, enhance the heat dissipation effect, and increase the safety performance of the battery pack 1. It should be noted that in the embodiment, a material of the box body is metal, the support frame 14 is made of plastic or other materials with good insulation. A placement part located on the bottom of the installation slot 14A prevents a bottom surface of the battery cell 21 from being in contact with the bottom plate 111 and plays an insulating and protective role.

In the embodiment, one of the support frame 14 and the reinforcement beam 121 is provided with fixing holes 14B, and the other one of the support frame 14 and the reinforcement beam 121 is provided with protrusions 12B. One protrusion 12B is arranged corresponding to one fixing hole 14B, and the protrusion 12B is clamped in the fixing hole 14B.

Preferably, in the embodiment, the support frame 14 is provided with the plurality of fixing holes 14B, and each fixing hole 14B penetrates the support frame 14. Sides of the reinforcement beams 121 close to the support frame 14 are provided with the plurality of protrusions 12B. One protrusion 12B is provided corresponding to one fixing hole 14B, the protrusion 12B is clamped in the fixing hole 14B, and the protrusion 12B and the support frame 14 are fixed by welding. Preferably, the protrusions 12B of the reinforcement beams 121 and the support frame 14 are fixed by spot welding, and welding points are located on one side of the support frame 14 close to the bottom plate 111.

It can be understood that the support frame 14 is provided with the plurality of installation slots 14A, and the installation slots 14A may reduce the rigidity of the support frame 14. In the embodiment, the protrusions 12B of the reinforcement beams 121 and the support frame 14 are fixed by spot welding, which increases the rigidity of the support frame 14 and improves the stability of the box body 10.

Specifically, in the embodiment, the fixing hole 14B is located between the adjacent installation slots 14A. The fixing hole 14B and the installation slot 14A are arranged at intervals. A diameter of the fixing hole 14B is less than the diameter the through hole 14A1. One protrusion 12B is provided corresponding to one fixing hole 14B. The protrusion 12B passes through the fixing hole 14B, the protrusion 12B is fixed to the support frame 14 by welding, and the welding point is located on one side of the support frame 14 facing away from the reinforcement beam 121.

It can be understood that in the embodiment, the support frame 14 is provided with the plurality of fixing holes 14B, sides of the reinforcement beams 121 close to the support frame 14 are provided with the plurality of protrusions 12B, the protrusions 12B are clamped in the fixing holes 14B, and the protrusions 12B and the support frame 14 are fixed by welding, so that a fixing strength between the reinforcement beam 121 and the support frame 14 is enhanced, thereby increasing a structural strength of the box body 10. At the same time, when collision occurs, the support frame 14 may provide a certain supporting force to the battery module 20, effectively improving the installation stability of the battery module 20, thereby further improving the protection effect of the box body 10 on battery module 20.

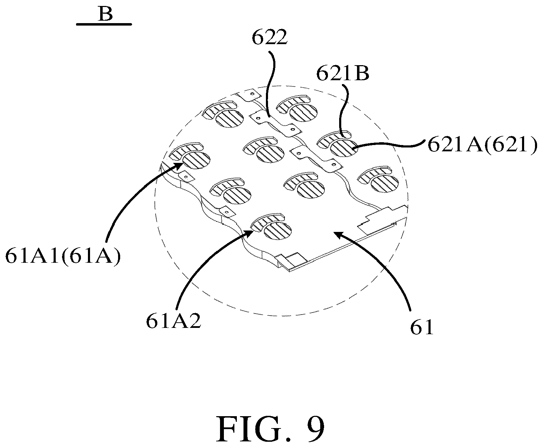

Furthermore, referring to FIG. 1, FIG. 2, FIG. 8, and FIG. 9, FIG. 8 is a schematic structural view of a CCS assembly provided by an embodiment of the present disclosure, and FIG. 9 is an enlarged schematic view of part B in FIG. 8.

In the embodiment, the battery pack 1 further includes a cell contacting system (CCS) assembly 60 disposed on one side of the battery module 20 facing away from the bottom plate 111. The CCS assembly 60 includes a fixing frame 61 and a busbar 62. The fixing frame 61 is provided with installation holes 61A, and the busbar 62 is embedded in the installation holes 61A. The busbar 62 is disposed in contact with the battery cells 21 and electrically connects the plurality of battery cells 21.

Specifically, the busbar 62 is configured to electrically connect the plurality of battery cells 21. The busbar 62 includes busbar units 621 and connecting arms 622. Each busbar unit 621 includes a positive connecting part 621A and a negative connecting part 621B. The installation holes 61A include positive installation holes 61A1 and negative installation holes 61A2. The positive connecting part 621A is electrically connected to a positive electrode of the battery cell 21 through the positive installation hole 61A1, and the negative connecting part 621B is electrically connected to a negative electrode of the battery cell 21 through the negative installation hole 61A2. The connecting arm 622 is configured to connect two adjacent busbar units 621. It can be understood that in the embodiment, in order to electrically connect the plurality of battery cells 21, the busbar 62 is provided on the top of the battery cells 21, the installation holes 61A for installing the busbar 62 are provided on the fixing frame 61, and the busbar 62 is embedded in the installation holes 61A and in contact with the battery cells 21, which effectively prevents the problem of a short circuit between the adjacent battery cells 21 caused by the misalignment of the busbar 62.

The embodiments also provide an electric equipment, which includes the battery pack described in any of the above embodiments.

It can be understood that the battery pack has been described in detail in the above embodiments, and the description will not be repeated here.

The battery pack includes the battery module, and the battery module is used as a power supply for the electric equipment. Therefore, the electric equipment also has various advantages of the above-mentioned battery module, which simplifies an overall structure of the electric equipment. The electric equipment may be a vehicle, an aircraft, or a mechanical production equipment, etc.

In the above embodiments, each embodiment is described with its own emphasis. For parts that are not described in detail in a certain embodiment, please refer to the relevant descriptions of other embodiments.

The above is a detailed introduction to the battery pack and the electric equipment provided by the embodiments. Specific examples are used in this paper to illustrate the principles and implementation methods of the present disclosure. The description of the above embodiments is only used to help understand methods and core ideas of the present disclosure. At the same time, for those skilled in the art, there will be changes in the specific implementation and application scope based on the ideas of the present disclosure. In summary, the content of the description should not be understood as a limitation of the present disclosure.

## Claims

1. A battery pack (1), **characterized by** comprising:
a battery module (20), comprising a plurality of cell groups (200) arranged at intervals along a first direction, wherein each of the cell groups (200) comprises a plurality of battery cells (21) arranged at intervals along a second direction;
a reinforcement module (12), comprising a plurality of reinforcement beams (121); and
a liquid cooling module (30), comprising a plurality of liquid cooling plates (31),
wherein the plurality of liquid cooling plates (31) and the plurality of reinforcement beams (121) are arranged alternately along the first direction, and every adjacent two of the liquid cooling plates (31) and the reinforcement beams (121) are inserted with one of the cell groups (200).

2. The battery pack according to claim 1, **characterized by** comprising a box body(10), wherein the box body(10) comprises a bottom plate (111) and a plurality of side beams (112), the plurality of side beams (112) are fixedly arranged on edges of the bottom plate (111) to enclose and define an accommodating cavity (10A); and
wherein the battery module (20), the reinforcement module (12), and the liquid cooling module (30) are all arranged in the accommodating cavity (10A), and both ends of each of the reinforcement beams (121) and the liquid cooling plates (31) are fixedly connected to the side beams (112).

3. The battery pack according to claim 2, **characterized in that**, each of the reinforcement beams (121) and/or the liquid cooling plates (31) abuts against outer peripheral surfaces of the battery cells (21) located on both sides, and each of the reinforcement beams (121) and/or the liquid cooling plates (31) matches the outer peripheral surfaces of the battery cells (21).

4. The battery pack according to claim 3, **characterized in that**, each of the battery cells (21) is a cylindrical battery cell, and each of the reinforcement beams (121) and/or the liquid cooling plates (31) has a serpentine corrugated structure that matches a cylindrical surface of the cylindrical battery cell.

5. The battery pack according to any one of claims 2-4, **characterized in that**, a plurality of first recesses (10B) and a plurality of second recesses (10C) are provided on sides of the side beams (112) close to the reinforcement beams (121), and the plurality of first recesses (10B) and the plurality of second recesses (10C) are alternately arranged at intervals along the first direction;
first plug-in parts (31A) are provided on sides of the liquid cooling plates (31) close to the side beams (112), and each of the first plug-in parts (31A) is plugged in a corresponding one of the first recesses (10B); and
second plug-in parts (121A) are provided on sides of the reinforcement beams (121) close to the side beams (112), and each of the second plug-in parts (121A) is plugged in a corresponding one of the second recesses (10C).

6. The battery pack according to claim 5, **characterized in that**, the second plug-in parts (121A) and the second recesses (10C) are fixed by welding.

7. The battery pack according to any one of claims 1-4, **characterized by** comprising a colloidal unit (40) sleeved on an outer surface of each of the battery cells (21).

8. The battery pack according to claim 7, **characterized in that**, the colloidal unit (40) comprises a foam rubber (41) provided with a plurality of openings, one of the openings is provided corresponding to one of the battery cells (21), and the outer surface of each of the battery cells (21) and an inner wall of each of the openings are bonded to each other.

9. The battery pack according to any one of claims 2-4, **characterized in that**, the box body (10) further comprises a support frame (14) disposed between the bottom plate (111) and the battery module (20), and the support frame (14) is fixedly connected to the reinforcement module (12) and the bottom plate (111); and
the support frame (14) is provided with a plurality of installation slots (14A), a depth of each of the installation slots (14A) is less than a thickness of the support frame (14), one of the installation slots (14A) is arranged corresponding to one of the battery cells (21), and the battery cells (21) are placed in the installation slots (14A).

10. The battery pack according to claim 9, **characterized in that**, a pressure relief cavity is defined and enclosed between the support frame (14), the bottom plate (111), and the side beams (112); and
the support frame (14) is further provided with a plurality of through holes (14A1), one of the through holes (14A1) is provided corresponding to one of the installation slots (14A), a diameter of each of the through holes (14A1) is less than a diameter of each of the installation slots (14A), each of the through holes (14A1) passes through a corresponding one of the installation slots (14A), and the through holes (14A1) are communicated with the pressure relief cavity.

11. The battery pack according to claim 9, **characterized in that**, one of the support frame (14) and the reinforcement beam (121) is provided with fixing holes (14B), and the other one of the support frame (14) and the reinforcement beam (121) is provided with protrusions (12B), one of the protrusions (12B) is arranged corresponding to one of the fixing holes (14B), and each of the protrusions (12B) is clamped in a corresponding one of the fixing holes (14B).

12. The battery pack according to claim 11, **characterized in that**, the protrusions (12B) and the fixing holes (14B) are fixed by welding.

13. The battery pack according to any one of claims 2-4, **characterized by** comprising a CCS assembly (60) disposed on one side of the battery module (20) facing away from the bottom plate (111), wherein the CCS assembly (60) comprises:
a fixing frame (61), provided with installation holes (61A); and
a busbar (62), embedded in the installation holes (61A) and disposed in contact with the battery cells (21) to electrically connect the battery cells (21).

14. The battery pack according to claim 13, **characterized in that**, the busbar (62) comprises a plurality of busbar units (621) and a plurality of connecting arms (622), the busbar units (621) comprise positive connecting parts (621A) and negative connecting parts (621B), the installation holes (61A) comprise positive installation holes (61A1) and negative pole installation holes (61A2), the positive connecting parts (621A) are electrically connected to positive electrodes of the battery cells (21) through the positive installation holes (61A1), the negative connecting parts (621B) are electrically connected to negative electrodes of the battery cells (21) through the negative pole installation holes (61A2), and each of the connecting arms (622) is configured to connect two adjacent ones of the busbar units (621).

15. An electric equipment, **characterized by** comprising the battery pack (1) according to any one of claims 1-14.
